# EUROPÄISCHE PATENTANMELDUNG

(11) **EP 0 894 565 A2**
(43) Veröffentlichungstag der Anmeldung: **03.02.1999**
(21) Anmeldenummer: 98113774.8
(22) Anmeldetag: 23.07.1998
(51) Int. Cl.: B23Q 7/06, B23Q 7/10

(54) **Abbundanlage**

(30) Priorität: 02.08.1997 DE 19733457
(71) Anmelder: Güntert, Engelbert, 79780 Stühlingen-Mauchen (DE)
(72) Erfinder: Güntert, Engelbert, 79780 Stühlingen-Mauchen (DE)
(74) Vertreter: Weiss, Peter, Dr. rer. nat.

(57) **Zusammenfassung**

Bei einer Abbundanlage zum Bearbeiten von Balken (1) in zumindest einer Bearbeitungsstation (8.1 - 8.3) soll der Bearbeitungsstation (8.1 - 8.3) ein Lager (2, 3, 4) für den Balken (1) und diesem wiederum ein Beschickungsarm (12) zugeordnet ist.

## Beschreibung

Die vorliegende Erfindung betrifft eine Abbundanlage zum Bearbeiten von Balken in zumindest einer Bearbeitungsstation.

Balken werden heute für viele Zwecke gebraucht. Insbesondere im Bauwesen übernehmen Balken tragende und stützende Funktionen, wobei sie zusammenwirken und deshalb vorher entsprechend bearbeitet werden müssen. Das Bearbeiten umfasst ein Sägen, Fräsen, Schlitzen, Stemmen, Bohren, Zapfen, Ausplatten, Längsplatten usw. Dies geschieht in eigenen Bearbeitungsstationen, wobei der Balken in der Regel von Hand in die Bearbeitungsstation eingeführt und dann von Hand zu einer nächsten Bearbeitungsstation verbracht wird.

Der derzeit technisch praktizierte Ablauf bei Abbundstrassen zur Herstellung von Balken im Bauwesen ist folgender:

Eine entsprechende Zeichnung für eine Mehrzahl von Balken, beispielsweise für ein Einfamilienhaus, kommt vom Statiker. Nunmehr muss eine Holzliste erstellt werden, d.h., die gesamte Zeichnung wird durchgegangen und jeder Balken einzeln definiert. Dies benötigt einen hohen Zeitaufwand.

Danach wird das entsprechende Material beim Sägewerk bestellt und zwar auf Grund der manuell erstellten Material- bzw. Holzliste. Das Sägewerk liefert aus dem allgemein üblichen Lagerangebot für Zimmerer das Holz gemäss der Liste, wobei mehrere Wochen vergehen. Nunmehr wird das Holz nach Sorten getrennt auf das Holzlager gelegt und die Holzliste in die Abbundanlage eingelesen. Die von der Abbundanlage angeforderten Balken werden manuell zur Bearbeitung vorgelegt.

Eine konventionelle Abbund- (Holzbearbeitungs-) Anlage hat mehrere hintereinander angeordnete Bearbeitungsstationen mit Maschinen, die weder horizontal noch vertikal beweglich sind. Jeder Bearbeitungspunkt kann immer nur eine fest eingestellte Bearbeitung (sägen, fräsen, schlitzen, bohren, zapfen, stemmen, ausplatten usw.) durchführen. Wird z.B. bei der letzten Station, die bis zu 40 m vom Beschickungspunkt entfernt sein kann, gebohrt; muss der Balken, der nur diese Bohrung erhalten soll, die gesamte Abbundstrecke durchlaufen. Auch hier wird erhebliche Zeit in Anspruch genommen.

Der vorliegenden Erfindung liegt die Aufgabe zugrunde, diese Nachteile zu beseitigen und eine Abbundanlage der oben genannten Art zu schaffen, mittels welcher Balken exakt und zeit- und kostenextensiv bearbeitet werden.

Zur Lösung dieser Aufgabe führt, dass der Bearbeitungsstation ein Lager für den Balken und diesem wiederum ein Beschickungsarm zugeordnet ist.

Das bedeutet, dass der Bearbeitungsstation selbst bereits ein Lager mit einer Auswahl an Balken zugeordnet ist, wobei diese Balken eine Standardgrösse aufweisen. Bevorzugt besteht das Lager aus zumindest einem Regal mit Fächern, welche auf eine Arbeitsebene der Bearbeitungsstation anheb- bzw. absenkbar sind. Dazu sind diese Fächer in einem Gestell vorgesehen, welches teleskopartig aus dem Regal ausfahrbar ist. Somit können die Balken sehr genau der Arbeitsebene der Bearbeitungsstation zugeordnet werden.

Auf Grund einer vorherigen Eingabe in die Steuerung von Lager und Bearbeitungsstation wird ein gewünschter Balken ausgesucht und auf die Arbeitshöhe der Bearbeitungsstation gebracht. Sodann ergreift der Beschickungsarm diesen Balken und schiebt ihn in die Bearbeitungsstation. Hier erfolgt jetzt eine Nullpunktjustierung, wobei die tatsächliche Länge des Balkens erfasst wird. Danach wird der Balken bearbeitet und bevorzugt zu einer weiteren Bearbeitungsstation weitergegeben.

In der letzten Bearbeitungsstation wird der Balken an einen Haltekopf übergeben, so dass der Beschickungsarm zur Aufnahme des nächsten Balkens frei wird. Der Haltekopf verbringt dann den Balken- auf ein vorbestimmtes Stapellager.

In den einzelnen Bearbeitungsstationen kann- der Balken bevorzugt von allen Seiten her bearbeitet werden. Er kann beispielsweise auch nur auf einer Kante aufliegen, wobei entsprechende Haltevorrichtungen vorgesehen sind, die diesen Balken in dieser Position fixieren. Die einzelnen Bearbeitungsstationen sind in der Horizontal- und Vertikalachse positionierbar und können zumindest teilweise auch in der Horizontalen zusätzlich um bis zum 360° gedreht werden.

Bei dem erfindungsgemässen Regallager handelt es sich um ein sehr bewegliches Regallager, welches programmgesteuert und ebenenorientiert ausgerichtet ist. Pro Ebene ist eine Mehrzahl von Lagerfächern vorgesehen. Die Bearbeitungsebene ist von jeder Schubladengestellebene vertikal ansteuerbar. Jede Schubladengestellebene (Lagerebene) ist über die gesamte Breite horizontal ausfahrbar. Jede Schubladengestellebene (Lagerebene) hat mehrere Lagerfächer (Lagerboxen), die mittels vertikalem Hebe- und horizontalem Bewegungsmechanismus der gesamten Schubladengestellebene dem Beschickungsarm zugeführt werden können.

Bei den Bearbeitungsstationen handelt es sich um multifunktionale Stationen mit horizontaler, vertikaler und 360° Positionierung und zusätzlicher multifunktionaler Positionierung des Balkens durch den Beschickungsarm. Der Platzbedarf der Bearbeitungsstation entspricht ca. einem Viertel des platzbedarfs der herkömmlichen Abbundanlage.

Durch die erfindungsgemässe Anlage erfolgt eine automatische Übernahme der Holzliste und die Anforderung von bestimmten Balken beim Sägewerk. Dies erspart sehr viel Zeit. Auch die Materialkontrolle erfolgt automatisch durch die Software. Das Werkstück bleibt vom Ergreifen durch den Beschickungsarm bis zum letzten Bearbeitungsvorgang fixiert. Hier wird erhebliche Zeit und Personal eingespart. Ferner erfolgt eine Steigerung der Präzision der Bearbeitung.

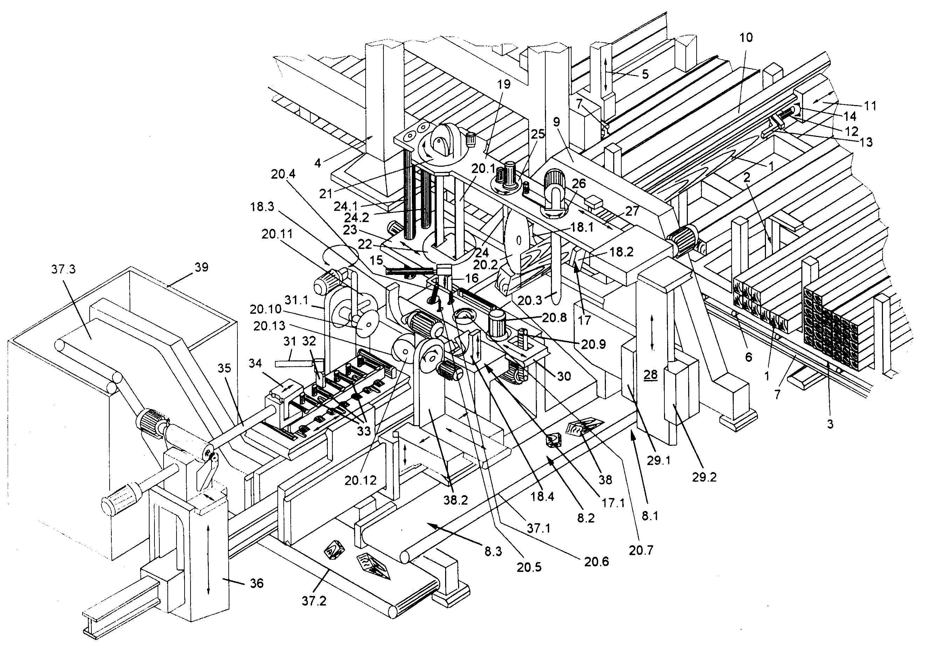

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine perspektivische Ansicht einer erfindungsgemässen Anlage zum Bearbeiten von Balken 1. Diese Balken 1 befinden sich in Fächern 2, die von einem Gestell 3 ausgebildet werden. Das Gestell 3 kann aus einem nur teilweise dargestellten Regal 4 ausgefahren und in dieses Regal 4 wieder zurückgefahren werden. Dabei ist eine Mehrzahl von Gestellen 3 in dem Regal 4 anhebbar bzw. absenkbar angeordnet, wie dies durch den Doppelpfeil 5 angedeutet ist.

Das Gestell 3 ist über Rollen 6 gegenüber einer Schiene 7 abgestützt, so dass das gewünschte Fach 2 vor eine Bearbeitungsstation 8.1 gebracht werden kann. Dies geschieht so, dass sich ein zu bearbeitender Balken 1 auf Bearbeitungshöhe der Bearbeitungsstation 8.1 befindet. Deshalb ist die Schiene 7 nicht etwa bodengestützt, sondern schubladenartig ausfahrbar aus dem Regal 4, wobei jedem Gestell 3 eine eigene Schiene 7 zugeordnet ist. Mit dem Gestell 3 ist auch die Schiene 7 in dem Regal 4 anhebbar bzw. absenkbar angeordnet.

Von einem Rahmen 9 der Bearbeitungsstation 8.1 ragt eine Hängeschiene 10 ab und übergreift das Gestell 3. An der Hängeschiene 10 befindet sich ein entlang der Hängeschiene 10 verfahrbarer Schlitten 11, an dem sich ein Beschickungsarm 12 befindet. Dieser Beschickungsarm 12 besitzt einen Greifer 13, der bevorzugt gabelförmig bzw. U-förmig ausgestaltet ist. Mit dem Greifer 13 kann ein Ende eines Balkens 1 angegriffen werden. Der Beschickungsarm 12 ist drehbar, wie dies durch den Doppelpfeil 14 angedeutet wird.

In der Bearbeitungsstation 8.1 ist ein Anpressarm 15 zu erkennen, der drehbar an einer vertikal bewegbaren Stütze 16 angeordnet ist. Dieser Anpressarm 15 kann in den Vorschubweg des Balkens 1 eingeschwenkt werden.

Ferner besitzt die Bearbeitungsstation 8.1 eine Halteeinrichtung 17, die vor allem zwei Backen 18.1 und 18.2 aufweist, zwischen denen der Balken 1 eingeklemmt werden kann.

An einer Traverse 19 der Bearbeitungsstation 8.1 befindet sich eine Reihe von Werkzeugen 20.1 bis 20.3, wobei eine Bandsäge 20.1, eine Kreissäge 20.2 und eine Kettensäge 20.3 zu erkennen ist. Die Bandsäge 20.1 befindet sich an einem Drehteller 21 in der Traverse 19 und durchgreift gegenüberliegend einen weiteren Drehteller 22 in einem Tisch 23, wobei dieser Tisch 23 an Säulen 24.1 und 24.2 geführt ist.

Die Kreissäge 20.2 ist über einen Haltestreifen 24 mit einem weiteren Drehteller 25 in der Traverse 19 verbunden, ebenso die Kettensäge 20.3 mit einem weiteren Drehteller 26.

Insgesamt ist die Traverse 19 horizontal bewegbar, was durch den Doppelpfeil 27 angedeutet ist. Ferner hängt sie an einem vertikal bewegbaren Rahmenstreifen 28, der zwischen zwei Backen 29.1 und 29.2 gelagert ist. Auf diese Weise ist eine allseitige Bewegbarkeit und Positionierung der Werkzeuge 20.1 bis 20.3 gewährleistet. Nicht näher gekennzeichnet sind die entsprechenden Motoren zum Antreiben der Werzeuge 20.1 bis 20.3 und zum Drehen der Drehteller 21, 22, 25 und 26 sowie zum Anheben und Absenken des Tisches 23 und zum Verschieben der Traverse 19 bzw. des Rahmenstreifens 28.

Auf die Bearbeitungsstation 8.1 folgt eine weitere Bearbeitungsstation 8.2, in der eine weitere Bearbeitung des Balkens 1 vorgenommen werden kann. Zu diesem Zweck ist in dieser zweiten Bearbeitungsstation 8.2 eine weitere Halteeinrichtung 17.1 vorgesehen, die wiederum zwei Backen 18.3 und 18.4 aufweist. An einem Schubtisch 30 sind weitere Werkzeuge 20.4 bis 20.9 zum Fräsen, Schlitzen, Stemmen, Bohren usw. vorgesehen.

Auf die Bearbeitungsstation 8.2 folgt eine dritte Bearbeitungsstation 8.3, in der ein Zapfen, Ausplatten, Längsplatten usw. des Balkens 1 erfolgt. Die entsprechenden Werkzeuge sind mit 20.10 bis 20.13 gekennzeichnet. Sie befinden sich jeweils gegenüberliegend an Stützrahmen 31.1 und 31.2, die wiederum verschiebbar und höhenverstellbar mit weiteren Rahmenelementen verbunden sind. Ferner sind den Werkzeugen 20.10 bis 20.13 verschiedene Motoren, Drehteller usw. zugeordnet, die eine allseitige Verschwenkbarkeit der Werkzeuge 20.10 bis 20.13 gewährleisten können, so dass sämtliche mögliche Schnitte an dem Balken 1 durchgeführt werden können.

In der Bearbeitungsstation 8.3 befindet sich ein weiterer Anpressarm 31, der ähnlich wie der Anpressarm 15 auch an einer Stütze 32 drehbar angeordnet ist, wobei die Stütze 32 vertikal bewegbar ist.

In der Bearbeitungsstation 8.3 ist eine Rollenbahn 33 vorgesehen, auf der der Balken 1 geführt werden kann. Dabei ist auch ein Haltekopf 34 vorgesehen, der, ähnlich dem Greifer 13 gabel- bzw. U-förmig ausgestaltet ist. Er ist an einer Stange 35 angeordnet, die wiederum drehbar, horizontal und vertikal versetzbar an einem entsprechenden Maschinengestell 36 vorgesehen ist.

Neben und unterhalb der Bearbeitungsstationen 8.1 bis 8.3 befinden sich Förderbänder 37.1, 37.2 und 37.3, über die Holzabfälle 38 in einen Behälter 39 transportiert werden können.

Die Funktionsweise der vorliegenden Erfindung ist folgende:

Beispielsweise von einem Statiker kommt eine Zeichnung über die Erstellung eines Einfamilienhauses in Holzbauweise. Die entsprechenden Daten (Holzliste) werden entsprechend den Zeichnungen automatisch generiert und der erfindungsgemässen Abbundanlage zur Verfügung gestellt. Das Materiallager, welches unter anderem auch das Regal 4 aufweist, wird per Software auf den in der Holzliste definierten Bedarf abgefragt. Dies geschieht aus Sicherheitsgründen, da die Regale 4 normalerweise immer voll bestückt sind. Die Kapazität der einzelnen Fächer 2 ist für eine bestimmte Hausgrösse auslegbar. Bei Objekten, welche die Standardgrösse überschreiten, muss ein Nebenlager (eines des Schubfachgestelle 3 wird als solches definiert) vorhanden sein, um dies kurzfristig auffüllen zu können. Ein solcher Fall wird direkt von der Steuerungssoftware angezeigt.

Ein gewünschter Balken wird nun softwaregesteuert von dem Lager abgerufen. Hierzu ermittelt die Software, in welchem Fach der gewünschte Balken liegt. Das entsprechende Gestell wird im Regal auf Arbeitshöhe angehoben und aus dem Regal ausgefahren, wobei die Schiene 7 teleskopartig zusammen mit dem Gestell 3 aus dem Regal 4 ausfährt.

Sobald sich der gewünschte Balken auf Arbeitshöhe der Bearbeitungsstation 8.1 befindet, wird der Schlitten 11 herangefahren, und der Greifer 13 greift ein Ende des Balkens 1 an. Über den Schlitten 11 wird dann der Balken 1 in die erste Bearbeitungsstation 8.1 eingeschoben, wobei ein Balkenkopf an dem eingeschwenkten Anpressarm 15 anschlägt. Hier kann jetzt eine Nullpunktjustierung erfolgen, da die Länge des Balkens zwischen dem Anpressarm 15 und dem Schlitten 11 bzw. dem Greifer 13 ermittelt werden kann.

Der Beschickungsarm 12 zusammen mit dem Greifer 13 hält das Werkstück über alle eventuell erforderlichen Bearbeitungsschritte hinweg fest. Er kann den Balken bei jedem Bearbeitungspunkt horizontal, vertikal und um 360° positionieren. Der Balken bleibt bevorzugt so lange fixiert, bis der letzte Bearbeitungsvorgang abgeschlossen ist. Soll von der Standardlänge des Balkens eine bestimmte Länge übrig bleiben, wird dieser Rest von dem Beschickungsarm 12 in das Fach 2 zurückgelegt und von der Software registriert.

Während der Bearbeitung in der Bearbeitungsstation 8.1 wird der Balken 1 zusätzlich von der Halteeinrichtung 17 festgelegt, so dass nun die Werkzeuge 20.1 bis 20.3 entsprechende computergesteuerte Schnitte vornehmen können.

Danach erfolgt ein Weitertransport zur nächsten Bearbeitungsstation 8.2 und danach zur Bearbeitungsstation 8.3, wobei in den jeweiligen Bearbeitungsstationen 8.2 und 8.3 weitere Bearbeitungsschritte an dem Balken durchgeführt werden.

Die einzelnen Bearbeitungsstationen 8.1 bis 8.3 sind in der Horizontal- und Vertikalachse positionierbar und können teilweise auch in der Horizontalen zusätzlich um zweimal 180 Grad (360°) gedreht (positioniert) werden. In der letzten Bearbeitungsstation ist ein eigener Haltekopf 34 vorgesehen, der den Balken von dem Beschickungsarm 12 übernimmt. Dieser Haltekopf 34, der an dem allseitig bewegbaren Maschinengestell 36 angeordnet ist, kann den Balken über die Rollenbahn 33 von der Fertigungsstrasse abziehen und einer Stapelvorrichtung zuführen.

Abfälle (Verschnitt) werden an allen Bearbeitungsstationen über entsprechende Rutschen den Förderbändern 37.1 und 37.2 zugeführt und gelangen in den Behälter 39. Der Abfall wird für eine bereits bestehende Firmenheizung verwertet.

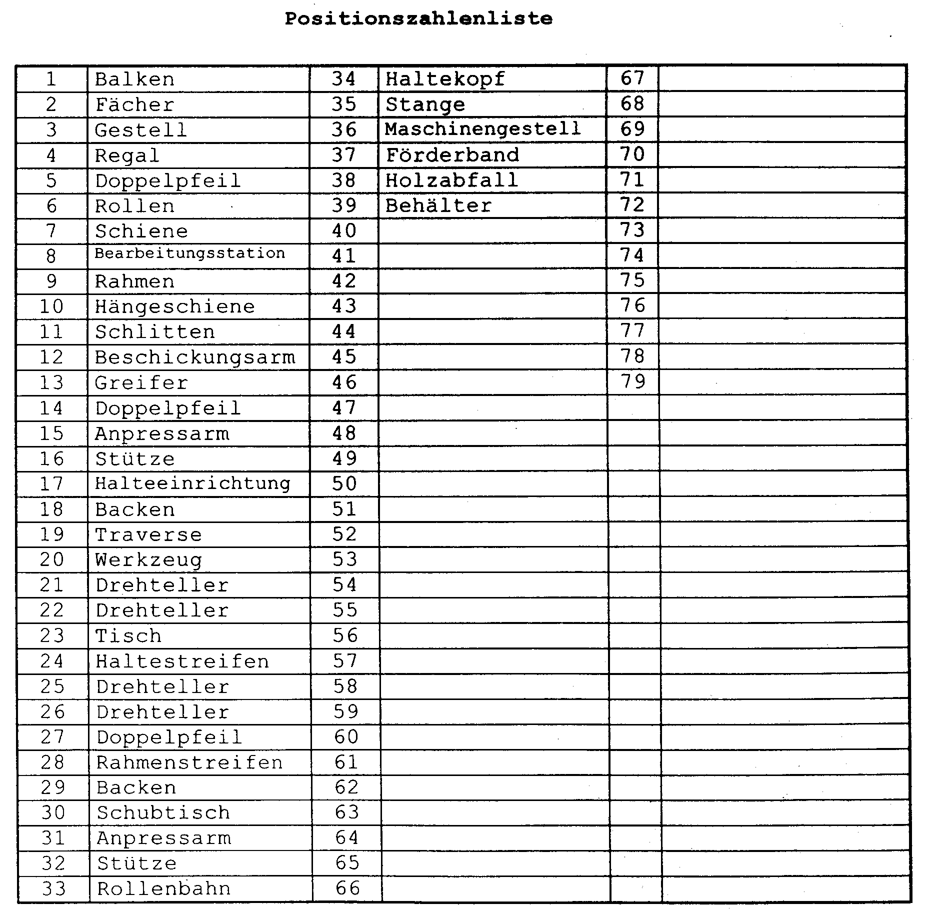

## Patentansprüche

1. Abbundanlage zum Bearbeiten von Balken (1) in zuminest einer Bearbeitungsstation (8.1 - 8.3),
dadurch gekennzeichnet,
dass der Bearbeitungsstation (8.1 - 8.3) ein Lager (2, 3, 4) für den Balken (1) und diesem wiederum ein Beschickungsarm (12) zugeordnet ist.

2. Abbundanlage nach Anspruch 1, dadurch gekennzeichnet,dass das Lager aus zumindest einem Regal (4) mit Fächern (2) besteht, welche auf eine Arbeitsebene der Bearbeitungsstation (8.1 - 8.3) anheb- bzw. absenkbar sind.

3. Abbundanlage nach Anspruch 2, dadurch gekennzeichnet, dass die Fächer (2) in einem Gestell (3) vorgesehen sind, welches teleskopoarig aus dem Regal (4) ausfahrbar ist.

4. Abbundanlage nach Anspruch 1 oder 3, dadurch gekennzeichnet, dass der Beschickungsarm (12) einen Greifer (13) aufweist, der drehbar ist.

5. Abbundanlage nach Anspruch 4, dadurch gekennzeichnet, dass der Greifer (13) an einem Schlitten (11) angeordnet und der Abstand zwischen Greifer (13) und Schlitten (11) veränderbar ist.

6. Abbundanlage nach Anspruch 5, dadurch gekennzeichnet, dass der Schlitten (11) entlang einer Hängeschiene (10) verfahrbar ist.

7. Abbundanlage nach wenigstens einem der Ansprüche 5 oder 6, dadurch gekennzeichnet, dass in der Bearbeitungsstation (8.1 - 8.3) ein Anpressarm (15) zur Längenbestimmung des Balkens (1) und zur Nullpunktjustierung vorgesehen ist.

8. Abbundanlage nach wenigstens einem der Ansprüche 1-7, dadurch gekennzeichnet, dass in der Bearbeitungsstation (8.1 - 8.3) eine Halteeinrichtung (17) für den Balken (1) vorgesehen ist.

9. Abbundanlage nach Anspruch 8, dadurch gekennzeichnet, dass in der Bearbeitungsstation (8.1 - 8.3) eine Mehrzahl von Werkzeugen (20.1 - 20.13) angeordnet ist.

10. Abbundanlage nach Anspruch 9, dadurch gekennzeichnet, dass die Werkzeuge (20.1 - 20.13) an Werkzeugträgern horizontal, vertikal verfahr- und drehbar angeordnet sind.

11. Abbundanlage nach wenigstens einem der Ansprüche 1-10, dadurch gekennzeichnet, dass mehrere Bearbeitungsstationen (8.1 - 8.3) aufeinanderfolgend vorgesehen sind.

12. Abbundanlage nach wenigstens einem der Ansprüche 1-11, dadurch gekennzeichnet, dass der Bearbeitungs-station (8.1 - 8.3) ein Haltekopf (34) für den Balken (1) zugeordnet ist, welcher den Balken (1) von dem Beschickungsarm (12) übernimmt.

13. Abbundanlage nach Anspruch 12, dadurch gekennzeichnet, dass der Haltekopf (34) drehbar und verfahrbar ist.

14. Abbundanlage nach wenigstens einem der Ansprüche 1-13, dadurch gekennzeichnet, dass der Bearbeitungsstation (8.1 - 8.3) zumindest ein Förderband (37.1 - 37.3) zum Abführen der Abfälle zugeordnet ist.
